(19) Europäisches Patentamt
European Patent Office
Office européen des brevets

(11) **EP 4 518 456 A1**

## (12) EUROPEAN PATENT APPLICATION

(43) Date of publication:
**05.03.2025 Bulletin 2025/10**

(21) Application number: **23194755.7**

(22) Date of filing: **01.09.2023**

(51) International Patent Classification (IPC):
*H04W 52/14* (2009.01)   *H04W 52/36* (2009.01)
*H04W 52/34* (2009.01)   *H04W 74/0808* (2024.01)

(52) Cooperative Patent Classification (CPC):
**H04W 52/367; H04W 52/146; H04W 52/346**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **TIIROLA, Esa Tapani**
  **Kempele (FI)**

• **UMEDA, Hiromasa**
  **Machida (JP)**
• **HOOLI, Kari Juhani**
  **Oulu (FI)**
• **TERVO, Oskari**
  **Oulu (FI)**
• **PIIPPONEN, Antti-Veikko Sakari**
  **Helsinki (FI)**

(74) Representative: **Script Intellectual Property LLP**
**Suite J, Anchor House**
**School Close**
**Chandlers Ford**
**Eastleigh, Hampshire SO53 4DY (GB)**

## (54) APPARATUS AND METHOD FOR DETERMINING A RADIO FREQUENCY CARRIER

(57)    The disclosure relates to an apparatus comprising at least one processor and at least one memory storing instructions that when executed by the at least one processor cause the apparatus at least to perform receiving from a network node an indication of a second radio frequency carrier. The second radio frequency carrier is contained within a first radio frequency carrier over which the network node communicates. One or more out-of-band emission requirements for the apparatus are defined with respect to the first radio frequency carrier. The apparatus is further caused to perform determining at least one user equipment radio frequency requirement based on the second radio frequency carrier and transmitting a signal over the second radio frequency carrier based on the at least one user equipment radio frequency requirement and the one or more out-of-band emission requirements.

FIG. 6

**Description**

TECHNOLOGICAL FIELD

Various example embodiments relate to an apparatus and a method for determining a radio frequency carrier.

BACKGROUND

A user equipment (UE) may communicate over a radio frequency (RF) carrier. There are several requirements for the transmitted signal quality. Transmissions by a UE over the RF carrier may be subject to certain emissions requirements designed to limit unwanted emissions falling in adjacent RF bands. Additionally, error vector magnitude (EVM) and in-band emission (IBE) requirements need to be fulfilled. To meet these requirements, the UE may be allowed to apply a power reduction, such as a maximum power reduction (MPR) value or an additional-maximum power reduction (A-MPR) value, to its transmissions to make it feasible for UE to fulfil the requirements. It would be desirable to provide an arrangement in which the UE could transmit with greater power while fulfilling the transmitted signal quality.

BRIEF SUMMARY

The scope of protection sought for various example embodiments of the disclosure is set out by the independent claims. The example embodiments and features, if any, described in this specification that do not fall under the scope of the independent claims are to be interpreted as examples useful for understanding various embodiments of the invention.
According to various, but not necessarily all, example embodiments of the disclosure there is provided an apparatus, comprising: at least one processor; and at least one memory storing instructions that when executed by the at least one processor cause the apparatus at least to perform: receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier; determining at least one user equipment radio frequency requirement based on the second radio frequency carrier; and transmitting a signal over the second radio frequency carrier based on the at least one user equipment radio frequency requirement and the one or more out-of-band emission requirements.
The apparatus may be further caused to perform: determining the at least one user equipment radio frequency requirement in response to receipt from the network node of an indication of the first radio frequency carrier and the indication of the second radio frequency carrier.
Transmitting the signal over the second radio frequency carrier may comprise meeting the one or more out-of-band emission requirements.
The at least one user equipment radio frequency requirement may comprise a maximum power reduction value and/or an additional-maximum power reduction value.
The apparatus may be further caused to perform: determining a maximum transmission power based on the at least one user equipment radio frequency requirement, and transmitting the signal with a power equal to or less than the maximum transmission power.
The apparatus may be further caused to perform: in response to receipt of an indication of a bandwidth part contained within the second radio frequency carrier, transmitting the signal within the bandwidth part.
The bandwidth part may comprise a plurality of resource blocks, and the apparatus may be further caused to perform: in response to receipt of an indication of a resource block allocation contained within the bandwidth part, transmitting the signal using the resource block allocation; and wherein the user equipment radio frequency requirement comprises a maximum power reduction value, the maximum power reduction value being determined based on a classification of the resource block allocation, each allocation of one or more resource blocks of the bandwidth part being classified, based on the second radio frequency carrier, as at least one of the following: an inner resource block allocation, an outer resource block allocation, and an edge resource block allocation.
Each allocation of one or more resource blocks of the bandwidth part may be classified as an inner resource block allocation.
The maximum power reduction value may be predetermined for each classification of resource block allocation.
The apparatus may be further caused to perform: determining whether the apparatus receives the indication of the second radio frequency carrier; and when it is determined that the apparatus has not received the indication of the second radio frequency carrier, setting the second radio frequency carrier to be equal to the first radio frequency carrier.
The apparatus may be further caused to perform: determining whether the apparatus receives the indication of the second radio frequency carrier; and when it is determined that the apparatus fails to receive the indication of the second radio frequency carrier, setting the second radio frequency carrier to be equal to an existing or a legacy carrier on which it is configured to transmit.

An out-of-band emissions region may comprise outside the first radio frequency carrier, out-of-band emissions being signals resulting from transmissions over the second radio frequency carrier falling in the out-of-band emissions region.

One or more in-band emission requirements may be defined with respect to the first radio frequency carrier, the at least one user equipment radio frequency requirement being based on the one or more in-band emission requirements.

An in-band emissions region may comprise inside the first radio frequency carrier, in-band emissions being signals resulting from transmissions over the second radio frequency carrier falling in the in-band emission region. The in-band emissions region for a resource block allocation may comprise outside the resource block allocation.

The apparatus may be further caused to perform: transmitting to the network node an indication of a desired width of the second radio frequency carrier.

The apparatus may comprise a UE.

The first radio frequency carrier may comprise a network carrier, and the second radio frequency carrier comprises a user equipment carrier.

According to various, but not necessarily all, example embodiments of the disclosure there is provided an apparatus, comprising: at least one processor; and at least one memory storing instructions that when executed by the at least one processor cause the apparatus at least to perform: configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier, wherein the second radio frequency carrier is configured based on at least one user equipment radio frequency requirement; and transmitting an indication of the second radio frequency carrier to the user equipment.

The apparatus may be further caused to perform: configuring the first radio frequency carrier; and transmitting an indication of the first radio frequency carrier to the UE.

The at least one first user equipment radio frequency requirement may comprise a maximum power reduction value and/or an additional-maximum power reduction value.

Configuring the second radio frequency carrier may be based on reducing at least one of the following: the maximum power reduction value, the additional-maximum power reduction value, a maximum of the maximum power reduction value and the additional-maximum power reduction value, and a total of the maximum power reduction value and the additional-maximum power reduction value. Reducing may comprise minimising. Reducing may comprise reducing compared to legacy arrangements.

Configuring the second radio frequency carrier may be based on meeting the one or more out-of-band emission requirements.

Configuring the second radio frequency carrier may comprise selecting the second radio frequency carrier from a set of radio frequency carriers. The set may be predetermined.

Configuring the second radio frequency carrier may be based on reducing the maximum power reduction value or the additional-maximum power reduction value compared to a maximum power reduction value or an additional-maximum power reduction value when the out-of-band emission requirements are defined with respect to the second radio frequency carrier when the second radio frequency carrier is equal to the first radio frequency carrier or with respect to the bandwidth part when the second radio frequency carrier is equal to the bandwidth part, respectively.

The apparatus may be further caused to perform: configuring another second frequency carrier contained within the first radio frequency carrier, wherein each of the second radio frequency carriers are located on a same resource block grid and are time synchronized.

The first radio frequency carrier and the second radio frequency carrier may be located on a same resource block grid and are time synchronized.

The apparatus may be further caused to perform: determining a bandwidth part in which the user equipment is configured to transmit, the second radio frequency carrier being configured such that the bandwidth part is contained within the second radio frequency carrier; and transmitting an indication of the bandwidth part to the UE.

The indication of the bandwidth part, the indication of the first radio frequency carrier, and the indication of the second radio frequency carrier may be included in a same transmission. The indication of the first radio frequency carrier and the indication of the second radio frequency carrier may be included in a same transmission.

The bandwidth part may comprise a plurality of resource blocks, and the apparatus may be further caused to perform: determining a resource block allocation contained within the bandwidth part for a transmission by the user equipment; and transmitting an indication of the resource block allocation to the user equipment; and wherein the user equipment radio frequency requirement comprises a maximum power reduction value, the maximum power reduction value being determined based on a classification of the resource block allocation, each allocation of one or more resource blocks of the bandwidth part being classified, based on the second radio frequency carrier, as at least one of the following: an inner resource block allocation, an outer resource block allocation, and an edge resource block allocation.

The second radio frequency carrier may be configured based on increasing a number of allocations of one or more resource blocks of the bandwidth part that are classified as an inner resource block allocation. Increasing may comprises maximising. Increasing may comprise increasing relative to legacy arrangements.

The second radio frequency carrier may be configured such that each allocation of one or more resource blocks of the bandwidth part is classified as an inner resource block allocation.

Determining a resource block allocation may comprise selecting an allocation of one or more resource blocks that is classified as an inner resource block allocation.

An out-of-band emissions region may comprise outside the first radio frequency carrier, out-of-band emissions being signals resulting from transmissions over the second radio frequency carrier falling in the out-of-band emissions region.

One or more in-band emission requirements may be defined with respect to the first radio frequency carrier, the at least one user equipment radio frequency requirement being dependent on the one or more in-band emission requirements.

An in-band emissions region may comprise inside the first radio frequency carrier, in-band emissions being signals resulting from transmissions over the second radio frequency carrier falling in the in-band emissions region. The in-band emissions region for a resource block allocation may comprise outside the resource block allocation.

The first radio frequency carrier may comprise consecutive resource blocks. The first radio frequency carrier may comprise consecutive subcarriers. The first radio frequency carrier may comprise a channel bandwidth. The first radio frequency carrier may comprise a 100 MHz channel. The first radio frequency carrier may be predefined. The first radio frequency carrier may comprise a plurality of aggregated carriers. The first radio frequency carrier may comprise two or more 100MHz carriers.

The second radio frequency carrier may comprise consecutive resource blocks. The second radio frequency carrier may comprise consecutive subcarriers. The second radio frequency carrier may comprise a virtual carrier. A direct current subcarrier of the second radio frequency carrier may be located within the second RF carrier. A direct current subcarrier of the second radio frequency carrier may be located at a centre of the second radio frequency carrier.

The apparatus may comprise a network node.

The first radio frequency carrier may comprise a network carrier, and the second radio frequency carrier may comprise a user equipment carrier.

The second radio frequency carrier may be configured to be offset by a number of resource blocks with respect to a starting resource block and/or an ending resource block of the first radio frequency carrier. The number of resource blocks may comprise a predetermined number of resource blocks.

The second radio frequency carrier may be configured such that a starting resource block and/or an ending resource block of the second radio frequency carrier is offset by a number of resource blocks with respect to the bandwidth part. The number of resource blocks may comprise a predetermined number of resource blocks.

The indication of the second radio frequency carrier may be transmitted in a SIB transmission. The indication of the second radio frequency carrier may be transmitted in a RRC transmission.

According to various, but not necessarily all, example embodiments of the disclosure there is provided an apparatus, comprising: means for receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier; means for determining at least one user equipment radio frequency requirement based on the second radio frequency carrier; and means for transmitting a signal over the second radio frequency carrier based on the at least one user equipment radio frequency requirement and the one or more out-of-band emission requirements.

The means may perform the optional features set out in relation to the apparatus mentioned above.

According to various, but not necessarily all, example embodiments of the disclosure there is provided an apparatus, comprising: means for configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier, wherein the second radio frequency carrier is configured based on at least one user equipment radio frequency requirement; and means for transmitting an indication of the second radio frequency carrier to the user equipment.

The means may perform the optional features set out in relation to the apparatus mentioned above.

According to various, but not necessarily all, example embodiments of the disclosure there is provided an apparatus, comprising: circuitry configured to perform receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier; circuitry configured to perform determining at least one user equipment radio frequency requirement based on the second radio frequency carrier; and circuitry configured to perform transmitting a signal over the second radio frequency carrier based on the at least one user equipment radio frequency requirement and the one or more out-of-band emission requirements.

The circuitry may be configured perform the optional features set out in relation to the apparatus mentioned above.

According to various, but not necessarily all, example embodiments of the disclosure there is provided an apparatus, comprising: circuitry configured to perform configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier, wherein the second radio frequency carrier is configured based on at least one user equipment radio frequency requirement; and circuitry configured to perform transmitting an indication of the second radio frequency carrier to the user equipment.

The circuitry may be configured perform the optional features set out in relation to the apparatus mentioned above.

According to various, but not necessarily all, example embodiments of the disclosure there is provided a method, comprising: receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier; determining at least one user equipment radio frequency requirement based on the second radio frequency carrier; and transmitting a signal over the second radio frequency carrier based on the at least one user equipment radio frequency requirement and the one or more out-of-band emission requirements.

The method may further comprise determining the at least one user equipment radio frequency requirement in response to receipt from the network node of an indication of the first radio frequency carrier and the indication of the second radio frequency carrier.

Transmitting the signal over the second radio frequency carrier may comprise meeting the one or more out-of-band emission requirements.

The at least one user equipment radio frequency requirement may comprise a maximum power reduction value and/or an additional-maximum power reduction value.

The method may further comprise determining a maximum transmission power based on the at least one user equipment radio frequency requirement, and transmitting the signal with a power equal to or less than the maximum transmission power.

The method may further comprise, in response to receipt of an indication of a bandwidth part contained within the second radio frequency carrier, transmitting the signal within the bandwidth part.

The bandwidth part may comprise a plurality of resource blocks, and the method may further comprise, in response to receipt of an indication of a resource block allocation contained within the bandwidth part, transmitting the signal using the resource block allocation; and wherein the user equipment radio frequency requirement comprises a maximum power reduction value, the maximum power reduction value being determined based on a classification of the resource block allocation, each allocation of one or more resource blocks of the bandwidth part being classified, based on the second radio frequency carrier, as at least one of the following: an inner resource block allocation, an outer resource block allocation, and an edge resource block allocation.

Each allocation of one or more resource blocks of the bandwidth part may be classified as an inner resource block allocation.

The maximum power reduction value may be predetermined for each classification of resource block allocation.

The method may further comprise determining whether the apparatus receives the indication of the second radio frequency carrier; and when it is determined that the apparatus has not received the indication of the second radio frequency carrier, setting the second radio frequency carrier to be equal to the first radio frequency carrier.

The method may further comprise determining whether the apparatus receives the indication of the second radio frequency carrier; and when it is determined that the apparatus fails to receive the indication of the second radio frequency carrier, setting the second radio frequency carrier to be equal to an existing or a legacy carrier on which it is configured to transmit.

An out-of-band emissions region may comprise outside the first radio frequency carrier, out-of-band emissions being signals resulting from transmissions over the second radio frequency carrier falling in the out-of-band emissions region.

One or more in-band emission requirements may be defined with respect to the first radio frequency carrier, the at least one user equipment radio frequency requirement being based on the one or more in-band emission requirements.

An in-band emissions region may comprise inside the first radio frequency carrier, in-band emissions being signals resulting from transmissions over the second radio frequency carrier falling in the in-band emission region. The in-band emissions region for a resource block allocation may comprise outside the resource block allocation.

The method may further comprise transmitting to the network node an indication of a desired width of the second radio frequency carrier.

The method may be performed by a UE.

The first radio frequency carrier may comprise a network carrier, and the second radio frequency carrier comprises a user equipment carrier.

According to various, but not necessarily all, example embodiments of the disclosure there is provided a method comprising: configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier, wherein the second radio frequency carrier is configured based on at least one user equipment radio frequency requirement; and transmitting an indication of the second radio frequency carrier to the user equipment.

The method may further comprise configuring the first radio frequency carrier; and transmitting an indication of the first radio frequency carrier to the UE.

The at least one first user equipment radio frequency requirement may comprise a maximum power reduction value and/or an additional-maximum power reduction value.

Configuring the second radio frequency carrier may be based on reducing at least one of the following: the maximum power reduction value, the additional-maximum power reduction value, a maximum of the maximum power reduction value and the additional-maximum power reduction value, and a total of the maximum power reduction value and the additional-maximum power reduction value. Reducing may comprise minimising. Reducing may comprise reducing compared to legacy arrangements.

Configuring the second radio frequency carrier may be based on meeting the one or more out-of-band emission requirements.

Configuring the second radio frequency carrier may comprise selecting the second radio frequency carrier from a set of radio frequency carriers. The set may be predetermined.

Configuring the second radio frequency carrier may be based on reducing the maximum power reduction value or the additional-maximum power reduction value compared to a maximum power reduction value or an additional-maximum power reduction value when the out-of-band emission requirements are defined with respect to the second radio frequency carrier when the second radio frequency carrier is equal to the first radio frequency carrier or with respect to the bandwidth part when the second radio frequency carrier is equal to the bandwidth part, respectively.

The method may further comprise configuring another second frequency carrier contained within the first radio frequency carrier, wherein each of the second radio frequency carriers are located on a same resource block grid and are time synchronized.

The first radio frequency carrier and the second radio frequency carrier may be located on a same resource block grid and are time synchronized.

The method may further comprise determining a bandwidth part in which the user equipment is configured to transmit, the second radio frequency carrier being configured such that the bandwidth part is contained within the second radio frequency carrier; and transmitting an indication of the bandwidth part to the UE.

The indication of the bandwidth part, the indication of the first radio frequency carrier, and the indication of the second radio frequency carrier may be included in a same transmission. The indication of the first radio frequency carrier and the indication of the second radio frequency carrier may be included in a same transmission.

The bandwidth part may comprise a plurality of resource blocks, and the method may further comprise determining a resource block allocation contained within the bandwidth part for a transmission by the user equipment; and transmitting an indication of the resource block allocation to the user equipment; and wherein the user equipment radio frequency requirement comprises a maximum power reduction value, the maximum power reduction value being determined based on a classification of the resource block allocation, each allocation of one or more resource blocks of the bandwidth part being classified, based on the second radio frequency carrier, as at least one of the following: an inner resource block allocation, an outer resource block allocation, and an edge resource block allocation.

The second radio frequency carrier may be configured based on increasing a number of allocations of one or more resource blocks of the bandwidth part that are classified as an inner resource block allocation. Increasing may comprise maximising. Increasing may comprise increasing relative to legacy arrangements.

The second radio frequency carrier may be configured such that each allocation of one or more resource blocks of the bandwidth part is classified as an inner resource block allocation.

Determining a resource block allocation may comprise selecting an allocation of one or more resource blocks that is classified as an inner resource block allocation.

An out-of-band emissions region may comprise outside the first radio frequency carrier, out-of-band emissions being signals resulting from transmissions over the second radio frequency carrier falling in the out-of-band emissions region.

One or more in-band emission requirements may be defined with respect to the first radio frequency carrier, the at least one user equipment radio frequency requirement being dependent on the one or more in-band emission requirements.

**EP 4 518 456 A1**

An in-band emissions region may comprise inside the first radio frequency carrier, in-band emissions being signals resulting from transmissions over the second radio frequency carrier falling in the in-band emissions region. The in-band emissions region for a resource block allocation may comprise outside the resource block allocation.

The first radio frequency carrier may comprise consecutive resource blocks. The first radio frequency carrier may comprise consecutive subcarriers. The first radio frequency carrier may comprise a channel bandwidth. The first radio frequency carrier may comprise a 100 MHz channel. The first radio frequency carrier may be predefined. The first radio frequency carrier may comprise a plurality of aggregated carriers. The first radio frequency carrier may comprise two or more 100MHz carriers.

The second radio frequency carrier may comprise consecutive resource blocks. The second radio frequency carrier may comprise consecutive subcarriers. The second radio frequency carrier may comprise a virtual carrier. A direct current subcarrier of the second radio frequency carrier may be located within the second RF carrier. A direct current subcarrier of the second radio frequency carrier may be located at a centre of the second radio frequency carrier.

The method may be performed by a network node.

The first radio frequency carrier may comprise a network carrier, and the second radio frequency carrier may comprise a user equipment carrier.

The second radio frequency carrier may be configured to be offset by a number of resource blocks with respect to a starting resource block and/or an ending resource block of the first radio frequency carrier. The number of resource blocks may comprise a predetermined number of resource blocks.

The second radio frequency carrier may be configured such that a starting resource block and/or an ending resource block of the second radio frequency carrier is offset by a number of resource blocks with respect to the bandwidth part. The number of resource blocks may comprise a predetermined number of resource blocks.

The indication of the second radio frequency carrier may be transmitted in a SIB transmission. The indication of the second radio frequency carrier may be transmitted in a RRC transmission.

According to various, but not necessarily all, example embodiments of the disclosure there is provided a non-transitory computer readable medium comprising program instructions stored thereon for causing an apparatus to perform at least the following: receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier; determining at least one user equipment radio frequency requirement based on the second radio frequency carrier; and transmitting a signal over the second radio frequency carrier based on the at least one user equipment radio frequency requirement and the one or more out-of-band emission requirements.

The instructions may be for performing the optional features set out in relation to the method mentioned above.

According to various, but not necessarily all, example embodiments of the disclosure there is provided a non-transitory computer readable medium comprising program instructions stored thereon for causing an apparatus to perform at least the following: configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier, wherein the second radio frequency carrier is configured based on at least one user equipment radio frequency requirement; and transmitting an indication of the second radio frequency carrier to the user equipment.

The instructions may be for performing the optional features set out in relation to the method mentioned above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION

Some example embodiments will now be described with reference to the accompanying drawings in which:

FIG. 1 illustrates the concept of bandwidth parts;
FIG. 2 illustrates the MPR for a power class 3 UE;
FIG. 3 illustrates the known carrier configurations for 5G NR;
FIG. 4 illustrates the classification of resource block allocations for the carrier configurations of FIG 3;
FIG. 5 illustrates an example distribution of A-MPR values;
FIG. 6 illustrates a carrier configuration according to an example embodiment;
FIG. 7 illustrates a carrier configuration according to an example embodiment;
FIG. 8 illustrates a resource block allocation in the carrier configuration of FIG. 7;

FIG. 9 illustrates the classification of resource block allocations for a carrier configuration according to an example embodiment;

FIG. 10 illustrates a comparison of intermodulation distortion products between two different carrier configurations;

FIG. 11 illustrates the allowed power reduction for a UE for different carrier configurations;

FIG. 12 illustrates a flow diagram according to an example embodiment;

FIG. 13 illustrates a flow diagram according to an example embodiment;

FIG. 14 illustrates a system according to an example embodiment.

DETAILED DESCRIPTION

Before discussing the example embodiments in any more detail, first an overview will be provided.

Embodiments relate to bandwidth adaptation and UE configured maximum power determination. Embodiments may relate to 6G.

A user equipment (UE) may communicate over a radio frequency (RF) carrier. Transmissions by a UE over the RF carrier may be subject to certain emissions requirements designed to limit unwanted emissions falling in adjacent RF bands. Additionally, error vector magnitude and in-band emission requirements need to be fulfilled. To meet these requirements, the UE may be allowed to apply a power reduction, such as a maximum power reduction (MPR) value or an additional-maximum power reduction (A-MPR) value, to its transmissions to make it feasible for UE to fulfil the requirements. The MPR and A-MPR may be predetermined for certain carrier configurations and resource block allocations. Embodiments provide a UE RF carrier configuration with reduced MPR and/or A-MPR values compared to legacy carrier configurations such that a UE may transmit signals with more power whilst meeting emissions requirements. To achieve this, embodiments generate a virtual UE carrier that is a subset of a wider network carrier and which encompasses a bandwidth part (BWP) in which resource block allocations for transmissions by the UE will be located. Furthermore, in 5G NR, the out-of-band emissions (OOBE) region is defined with respect to the UE carrier which may be equal to the network carrier or the BWP. In this configuration, intermodulation distortion (IMD) products are prone to falling within the victim band (i.e., in the OOBE region) and, as a result, a large A-MPR value may be required. In contrast, embodiments define the OOBE region to be outside the network carrier. Given that embodiments provide a UE carrier that is narrower than the network carrier, the OOBE region is relaxed compared to the UE carrier, thereby allowing smaller A-MPR values to be used. Having regard to MPR, an MPR value is given for each potential RB allocation in a BWP depending on the classification of that RB allocation. In 5G NR, the UE carrier can be equal to the BWP which means a proportion of RB allocations are classed as outer or edge RB allocations which typically have a greater MPR value. Embodiments configure the UE carrier such that the BWP is a narrower subset of the UE carrier. Consequently, the number of RB allocations within the BWP classified as inner and thus having a smaller MPR value can be increased. In some embodiments, the UE carrier is configured such that every potential RB allocation within the BWP is classified as an inner RB allocation. Reduced A-MPR and MPR values compared to legacy carrier configurations may enable the UE to transmit with more power whilst still meeting emissions requirements.

Bandwidth Adaptation

LTE does not support bandwidth adaptation within a carrier. This means that a network carrier is equal to a UE carrier and a component carrier (max 20MHz).

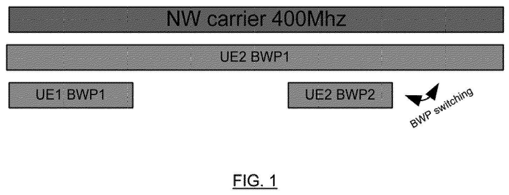

New radio (NR) introduced the bandwidth part (BWP) concept an example of which is shown in Fig. 1. Bandwidth parts are a set of continuous resource blocks (RBs) with a given numerology on the network carrier(s). A UE is generally only configured to receive and transmit over a currently active BWP. The maximum BWP size is 275 RBs. A single BWP can be processed by one 4k fast Fourier transform (FFT). BWPs cover mainly (only) baseband operation. UE RF configuration is an implementation issue defined, for example, based on RF requirements for UE channel bandwidth (CBW). Motivation behind use of BWPs include, for example, supporting different UE capabilities such as reduced capability (RedCap), improved UE power saving, and support for multiple parallel RRC configurations (e.g. different numerologies).

Fig. 1 shows the network carrier, NW carrier, and example bandwidth parts for two UEs. The bandwidth part (UE1 BWP1) for the first UE (UE1) represents a subset of the network carrier. UE1 may be a reduced capability UE. The second UE (UE2) may be configured to transmit over a first bandwidth part (UE2 BWP1) and/or a second bandwidth part (UE2 BWP2). The first bandwidth part covers the entire network carrier whilst the second bandwidth part is a subset of the network carrier. The second UE may switch between the first and the second BWP. For example, UE2 may switch to the second BWP to save power and it may switch to the first BWP for the bandwidth during a period of increased traffic.

BWPs are assumed to play a key role in the 6G air interface. There will likely be new use cases such as network energy saving, (sub-band) full duplex, and sensing which will most likely involve more challenging coexistence scenarios. This emphasises the need for an improved BWP solution optimised for the 6G needs. An example of such is CBW agnostic BWP/operation.

Maximum Power Reduction (MPR)

The maximum transmission power of a UE is +23dBm for a typical UE power class (Power class 3). A UE can reduce its maximum output power depending on, for example, the waveform, the modulation order, the power class of the UE, and the RB allocation. The MPR represents the upper limit on how much a UE can reduce the transmission power, for example, due to modulation, waveform and/or RB allocation, so when frequency resource allocation is in a more difficult/problematic position, the UE is allowed to reduce transmission power by the MPR. However, if it can meet the requirements defined for the transmitted signal quality otherwise, the UE need not apply the (full) reduction.

The available set of RBs, such as for an UL BWP, can be split into different RB allocation regions to reflect different OBO performance and different MPR requirements. Depending on the scenario, there can be two RB allocation regions/classifications (such as inner and outer), or three RB allocation regions (such as inner, outer and edge). Those RB allocation regions can be determined according to existing rules defined for NR, or according to different rules. It's also possible to split one or more of the existing RB allocation regions into multiple sub-regions with different MPR requirements. Different regions (or sub-regions) may correspond to different RB allocation combinations of RB_start and number of RBs.

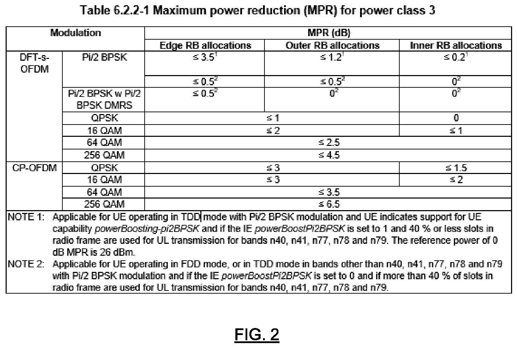

The maximum output power reduction is limited by standardized MPR values, examples of which are shown in Fig. 2. Fig. 2 shows that, for each modulation type, separate MPR values are given for edge, outer, and inner RB allocations for a configured CBW with $N_{RB}$ resource blocks. In general, inner RB allocations have a smaller MPR value than outer and edge RB allocations. For example, for DFT-s-OFDM waveform with modulation QPSK, edge and outer RB allocations have an MPR value of 1 whilst inner RB allocations have an MPR value of 0. A larger MPR is required for RB allocations which require the UE to reduce the power of its transmissions to meet emissions requirements. If these emissions requirements are relaxed or for RB allocations which generate negligible emissions, a smaller MPR can be assigned allowing for a more powerful transmission. More powerful transmissions are generally desirable because transmission coverage, signal-to-noise ratio and/or data rate can be improved.

RB allocations may be classified as one of edge, outer, and inner RB allocations according to TS38.101-1 in which:

"Where the following parameters are defined to specify valid RB allocation ranges for Outer and Inner RB allocations: $N_{RB}$ is the maximum number of RBs for a given Channel bandwidth and subcarrier spacing defined in Table 5.3.2-1.
$RB_{Start,Low} = \max(1, \text{floor}(L_{CRB}/2))$
where max() indicates the largest value of all arguments and floor(x) is the greatest integer less than or equal to x.

$$RB_{Start,High} = N_{RB} - RB_{Start,Low} - L_{CRB}$$

The RB allocation is an Inner RB allocation if the following conditions are met

$$RB_{Start,Low} \leq RB_{Start} \leq RB_{Start,High},$$

and

$$L_{CRB} \leq \text{ceil}(N_{RB}/2)$$

where ceil(x) is the smallest integer greater than or equal to x.

An Edge RB allocation is one for which the RB's are allocated at the lowermost or uppermost edge of the channel with $L_{CRB} \leq 2$ RB's.

The RB allocation is an Outer RB allocation for all other allocations which are not an Inner RB allocation or Edge RB allocation."

Note that LCRB is defined as the RB allocation length, i.e., the transmission bandwidth in units of resource blocks.

Additional-Maximum Power Reduction (A-MPR)

A-MPR is the allowed maximum power reduction to meet additional emission requirements. A-MPR can be used, for example, to protect neighbouring bands, on which other radio access technologies may be used, from intermodulation products. The A-MPR can have a significant negative impact on uplink (UL) coverage. When an A-MPR value is defined, a UE may be allowed to apply a maximum of the MPR and the A-MPR, max(MPR, A-MPR). The use of A-MPR is configured with network signaling and may depend on the network carrier, the BWP, a RB allocation within the BWP, and on transmission waveform and modulation. It is commonly implemented to meet challenging emission requirements relating to a neighboring frequency band. Note that when deriving A-MPR requirements for UEs, it is assumed that the direct current subcarrier (DC) is in the middle of the channel bandwidth (CBW) of the UE's BWP. The UE reference architecture is a direct conversion transmitter which suffers from local oscillator leakage issues. Typically, the centre of the UE's baseband bandwidth aligns with the local oscillator frequency when unconverted. Hence, "DC subcarrier".

## Configured Maximum Output Power

In LTE and NR, a UE can set its configured maximum output power, $P_{CMAX,f,c}$, for a carrier, f, of a serving cell, c, in each slot within the specified high and low limits. The variables/parameters of these equations are defined in section 3.2 and 6.2.4 of TS 38.101-1:

$$P_{CMAX\_L,f,c} \leq P_{CMAX,f,c} \leq P_{CMAX\_H,f,c} \text{ with}$$

$$P_{CMAX\_L,f,c} = MIN \{P_{EMAX,c} - \Delta T_{C,c}, (P_{PowerClass} - \Delta P_{PowerClass}) - MAX(MAX(MPR_c + \Delta MPR_c, A\text{-}MPR_c) + \Delta T_{IB,c} + \Delta T_{C,c} + \Delta T_{RxSRS}, P\text{-}MPR_c) \}$$

$$P_{CMAX\_H,f,c} = MIN \{P_{EMAX,c}, P_{PowerClass} - \Delta P_{PowerClass} \}$$

Note that the low limit is impacted by MPR and A-MPR values which allow the UE to reduce its maximum output power to meet transmission RF requirements. As discussed above, MPR values depend on the waveform, modulation, power class as well as the RB allocation's location within a channel bandwidth. For example, MPR values for UE power class 3 are shown in Fig. 2 which highlights that smaller MPR values are allowed for inner RB allocations.

## Legacy Carrier Configurations

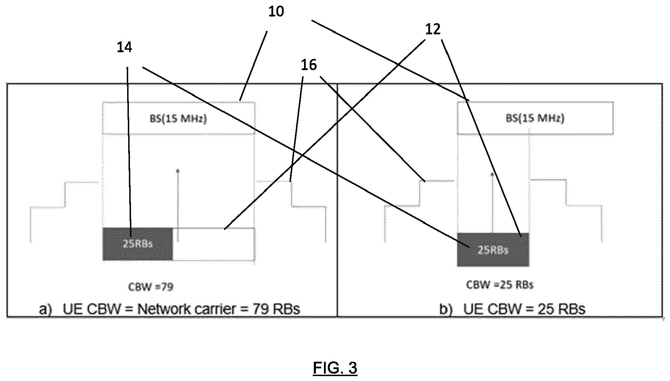

In 5G, a BWP impacts mainly baseband processing while RF requirements are defined according to UE channel bandwidth. The two carrier configuration options of 5G are shown in Fig. 3.

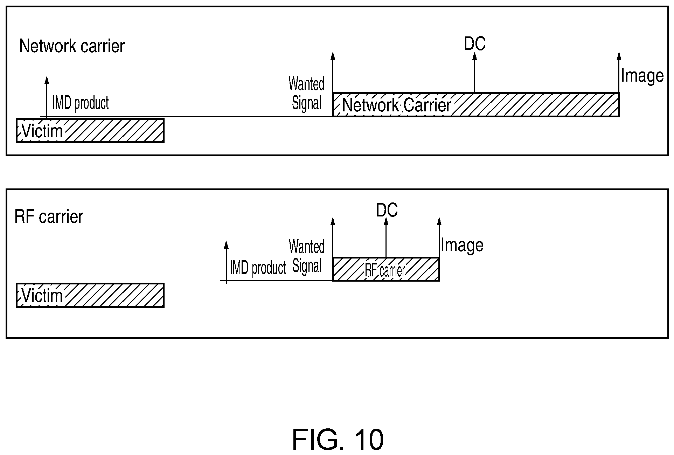

Fig. 3, option a (left-hand diagram) shows an example carrier configuration where the UE's channel bandwidth or carrier 12 is defined according to the network carrier 10 - i.e., they are the same. A BWP 14 for use by the UE for transmissions is a subset of the UE carrier 12. In this example, the channel bandwidth of the network carrier 10 and the UE carrier is 79 RBs whilst the BWP comprises 25 RBs. This approach can result in a high A-MPR due to intermodulation distortion (IMD) products likely falling in the out-of-band emissions (OOBEs) region 16. As explained in more detail below with respect to FIG. 10, IMD products may fall within the OOBE region because the direct current subcarrier (DC) is assumed to be in the middle of the channel bandwidth (shown by the arrow in Fig. 3). Emissions resulting from transmissions by the UE over the BWP falling in the out-of-band emissions region may cause unwanted interference with adjacent channels and so a high A-MPR may be assigned to enable the UE to reduce the transmission power appropriately to meet any OOBE requirements.

Fig. 3, option b (right-hand diagram) shows an example scenario similar to option a with the exception that the UE's channel bandwidth or carrier 12 is defined according to the bandwidth part 14 - i.e., they are the same. Like option a, the OOBE region is defined by the UE carrier. This configuration may result in a high MPR because a large proportion of potential RB allocations are classified as outer or edge RB allocations which may be assigned a large MPR value. Note that this carrier configuration may typically be used for RedCap UEs.

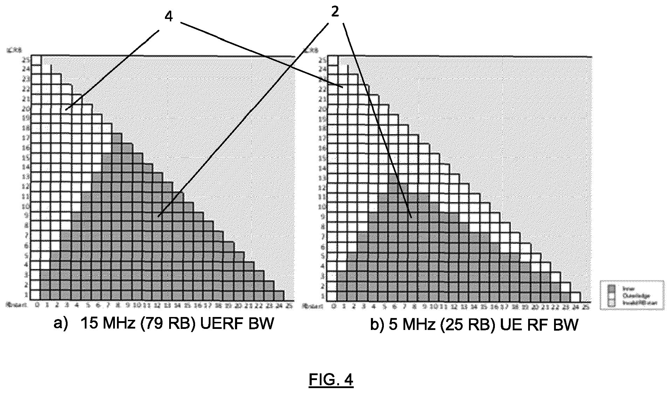

Fig. 4 shows the distribution of inner, outer, and edge RB allocations for the 25 RB BWPs of Fig. 3. Specifically, the Y-axes show the length of a RB allocation (LCRB) whilst the boxes on the x-axes represent valid starting RBs for that length of RB allocation. The grey area represents an invalid starting point. For example, if the RB allocation length was 25, you must use all 25 RBs of the BWP and so the only valid starting point is RB0. For a RB allocation length of 10, you may start the transmission at any of RBs 0 to 15. RBs 16 onwards are invalid starting points because the RB allocation would not fit within the BWP.

Fig. 4, option a (left-hand diagram) corresponds to the arrangement shown in Fig. 3, option a. The shaded blocks 2 indicate RB allocations being classified as inner RB allocations whilst the white or unshaded starting blocks 4 are classified as edge or outer RB allocations. Option a contains outer/edge RB allocations on the left side of the graph which aligns with the BWP 14 shown in Fig. 3, option a being at the left-hand edge of the UE carrier 12. Note that the classification of RB allocations is conventionally defined by the UE carrier relative to the OOBE region. By comparison, embodiments classify RB allocations on the basis of the network carrier because this is used to define the OOBE region as discussed in more detail below.

Fig. 4, option b (right-hand diagram) corresponds to the arrangement shown in Fig. 3, option b. In this case, the BWP 14 represents the entirety of the UE carrier 12 which is surrounded by the OOBE region 16 on both sides. Therefore, both sides of the BWP 14 have edge/outer RB allocations 4 whilst the middle RB allocations are classified as inner RB allocations 2. The larger portion of outer/edge RB allocations in option b indicates that option a may have higher MPR values for many of the RB allocations.

Note that an RB allocation may comprise a length (in RBs) and a starting RB. Within a RB allocation for a transmission, a constant power is used for the entire transmission across all the RBs in the RB allocation. Thus, Fig. 4 shows which RB allocations are classified inner and which RB allocations are classified outer. The inner classified RB allocations enable the UE to transmit with more power compared to the outer classified RB allocations because the outer classified RB allocations generate unwanted emissions (e.g., IMD products) which extend further outside the UEs allocated bandwidth and into the OOBE region. Hence, for outer and edge RB allocations, the UE must reduce the power more, but inner classified RB allocations have a larger distance in frequency to the OOBE region so unwanted emissions cause less interference on adjacent channels. Therefore, a higher power can be used for transmissions using inner RB allocations. However, on inner RB allocations, the UE may be allowed to reduce the power to meet requirements on transmission signal quality like error vector magnitude or in-band emissions.

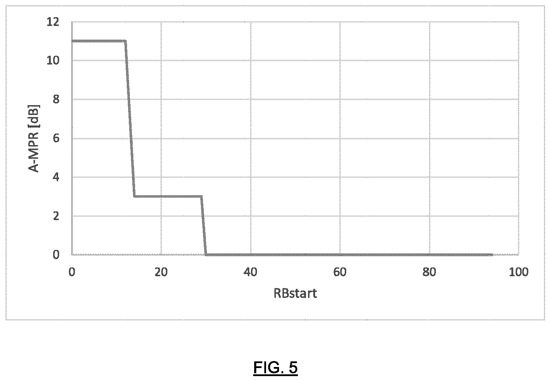

Fig. 5 shows the A-MPR for a given starting RB. Specifically, A-MPR values are shown for NS_50 parameter value on n39 or n98 bands for 40 MHz network carrier CBW, 12-RB allocation with 30 kHz SCS and with QPSK and DFT-s-OFDM waveform for different allocation starting RBs (RBstart).

The RBs on the left side of the graph are more likely to produce IMD products in the OOBE region or victim band and so the A-MPR value is increased to allow the UE to protect this victim band.

In summary, the maximum transmit power is not optimised in either legacy 5G carrier configuration due to the large MPR and A-MPR values. To mitigate the problems associated with these legacy carrier configurations, embodiments provide an improved carrier configurations for optimizing and controlling the UE RF requirements, such as MPR and A-MPR, in 6G (and possibly in 3GPP Rel-19).

Carrier Configurations

Embodiments may relate to 6G, 5G-Advanced or other radio systems UL bandwidth parts and present a mechanism for the network to optimise and control the trade-off between MPR and A-MPR.

Embodiments aim to configure the two RF carriers to maximize the potential (or required) transmission power of the UE while keeping the signal quality at a desired level and to enable the whole network to achieve improved performance via scheduling.

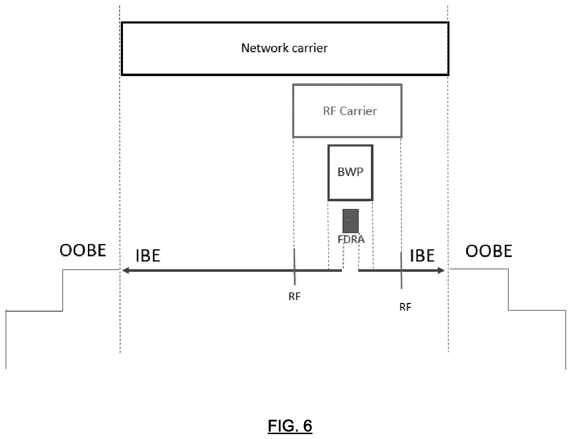

Fig. 6 shows a configuration of a network carrier, a UE RF carrier (RF carrier), a BWP, and a frequency domain resource (block) allocation (FDRA) according to an example embodiment. The network carrier (sometimes referred to as RF Carrier 1) and the UE RF carrier (sometimes referred to as RF Carrier 2) are configured by the network, for example, by a base station, for a particular BWP, for example, an uplink BWP. The different RF requirements are split between the two RF carriers in a predefined way.

In one example embodiment, the network node configures the network carrier to cover one channel bandwidth (e.g., 100 MHz) in a predefined location with a certain transmission bandwidth configuration (e.g. 30 kHz SCS, 273 RBs). In another example embodiment, the network node configures the network carrier to cover multiple aggregated carriers (e.g., 200 MHz using two 100 MHz carriers) with a predefined RB grid. In this case, there is symbol timing synchronization between the overlapping (in time) / parallel transmissions such that unwanted emissions can be assumed to behave like in-band emissions (IBE). The symbol timing synchronization may be limited to usage of a certain (same) subcarrier spacing. In yet another example embodiment, the network node configures the network carrier to cover any contiguous frequency range such as one or more NR bands allocated to an operator. In this case, there is also a predefined RB grid and symbol timing synchronization may be assumed. For each configuration of network carrier, the in-band emissions (IBE) region and the out-of-band emissions (OOBE) region are defined with respect to the network carrier. For example, the edges of the network carrier define where the in-band emissions (IBE) region ends and where the out-of-band emissions (OOBE) starts. Depending on the scenario, the IBE region and the OOBE region may be configured or defined separately (i.e., they don't necessarily have exactly the same borders). For example, the IBE region may end where the last full RB ends, while the OOBE region may be defined, e.g., according to the operator's bandwidth allocation. The network carrier is typically licensed to an operator who may decide the extent of the interference tolerated within the network carrier due to IBE. By comparison, adjacent bands are likely to be controlled by a different operator (and are typically asynchronous between operators), so there are often more stringent emission requirements to meet that may require greater power reductions. By defining the OOBE with respect to the network carrier, embodiments have relaxed the OOBE requirements compared to the known arrangements shown in Fig. 3 which can allow the UE to transmit with more power and can reduce UE complexity.

If the network carrier has not been configured, the current signalling related to the SCS-SpecificCarrier (TS 38.331) may be used as a fallback. In this case, legacy signalling of SCS-SpecificCarrier can be reused to define the proposed network carrier.

The UE RF carrier can be seen as a virtual carrier configured by the network node. The UE RF carrier is configured to be contained within the network carrier. In other words, the RBs of the UE RF carrier are aligned with but are a subset of the network RF carrier RBs. In some example embodiments, the network node configures the UE RF carrier using a RB offset relative to the network RF carrier, the offset being a number of RBs. For example, the starting RB of the UE RF carrier may be a specific distance (e.g., X RBs) from the start of the network RF carrier. In addition or alternatively, the ending RB of the UE RF carrier may be offset with respect to an ending RB of the network RF carrier. The UE RF carrier defines the allocation regions for MPR and A-MPR. Given that the UE RF carrier is narrower than the network RF carrier, intermodulation distortion products resulting from transmissions over the UE RF carrier within the BWP are less likely to fall outside the network RF carrier and in the OOBE region. Therefore, smaller A-MPR values (or even A-MPR = 0) can be used for a transmission by the UE within the BWP meaning that UE transmit power can be increased. Note that the UE RF carrier defines the UE's actual DC location. In an example embodiment, the DC is located at the centre of UE RF carrier 2. In another example embodiment, the DC is located within the RF carrier 2. In an example embodiment, it defines also the UE's actual RF configuration.

The network node also configures the UE RF carrier 2 bandwidth to be greater than that of the associated BWP. Moreover, the RBs of the BWP are a subset of the RBs of the UE RF carrier. This ensures that the UE can operate (frequently or even always) according to MPR rules defined for inner RB allocations which are defined when a distance between the edge(s) of the RB allocation and the edge(s) of the RF carrier 2 is greater than or equal to a certain threshold. The small MPR associated with inner classified RB allocations can provide improved UL coverage because the smaller MPR values for inner RB allocations mean that the UE can transmit with more power. In other words, if the UE RF carrier 2 is too close to the edges of the network carrier, then OOBE requirements defined by the NW carrier must be taken into account and the minimum MPR may not be able to be used. In some example embodiments, the bandwidth of RF carrier 2 corresponds to an existing maximum transmission bandwidth configuration as defined in TS 38.101-x (e.g. TS 38.101-1/Table 5.3.2-1). In some example embodiments, the RF carrier 2 is selected from a predetermined group of carriers. In some example embodiments, the MPR rules may be defined based on the RB allocation relative to the network RF carrier rather than relative to the UE RF carrier. For example, Fig. 6 shows the IBE region to cover the U E RF carrier and the network carrier so the IBE requirements may be the same inside both the network RF carrier and the UE RF carrier. Therefore, in some cases, the UE RF carrier does not need to be taken into account when calculating MPR values.

In some example embodiments, the network node configures the BWP for a certain UE carrier. In this case, to encourage potential RB allocations to be classified as inner RB allocations, the size of the BWP might need to be restricted and the location of the BWP might need to be restricted to avoid edge/outer RB start indices.

As discussed above, the UE RF transmission requirements (e.g. MPR and/or A-MPR) are dependent on the position and length of the UE RF carrier relative to the network carrier and the BWP. Therefore, the network node may configure the UE RF carrier to optimise or improve these UF RF requirements. There are multiple ways in which the UE RF carrier is configured based on a set of max(MPR, A-MPR) values corresponding to different RB allocations. In some example embodiments, the maximum value of max(MPR, A-MPR) is minimised. In some example embodiments, all max(MPR, A-MPR) values are targeted to be below a threshold value. In some example embodiments, max(MPR, A-MPR) values only for certain modulations and waveforms are considered (in addition to PRB allocations). For example, max(MPR, A-MPR) values for BPSK and QPSK modulations are considered with single carrier or DFT-spread-OFDM waveform to optimize coverage. In some embodiments, the size of RF carrier 2 is optimized with respect to the BWP to minimise MPR.

To inform the UE, an indication of the configured UE RF carrier is transmitted to the UE from the network node via RRC, e.g., as part of BWP configuration or CA configuration. Additionally, or alternatively, the indication may be broadcasted in a system information block (SIB1 or other SIB). In some example embodiments, the indication is signalled in a UE-specific configuration message, for example, dedicated RRC. Optionally, the network node may transmit an indication of the network carrier and/or BWP to the UE in the same transmission as the indication of the UE carrier or in separate transmissions. Related parameters may be included in the indications such as one or more of the following: number of resource blocks, subcarrier spacing, the associated channel/RF bandwidth or transmission bandwidth, the starting RB within a network carrier, the ending RB within a network carrier, and the DC location. When the UE RF carrier 2 is configured, the predefined split of RF requirements between the two (RF-related) carriers applies.

The UE may perform a determination whether or not it has received an indication of the UE carrier. If the UE determines that no indication of the UE RF carrier 2 is received (e.g., when no UE RF carrier has been configured), the UE RF carrier 2 may be assumed to be the same as the network carrier. In other words, the legacy configuration of Fig. 3 applies and the known way to determine UE RF requirements is a fallback.

In an example embodiment, the network carrier configuration and/or UE RF carrier 2 configuration is associated with a BWP (for example, when a network carrier or a UE RF carrier 2 are configured before the configuration of the current BWP). In some example embodiments, when the UE is switched from a first uplink BWP to a second uplink BWP, the UE RF carrier 2 configuration may change (e.g., implicitly via a predefined configuration). In some example embodiments, the UE is configured with multiple network carriers. In some example embodiments, the UE is configured with multiple UE carriers.

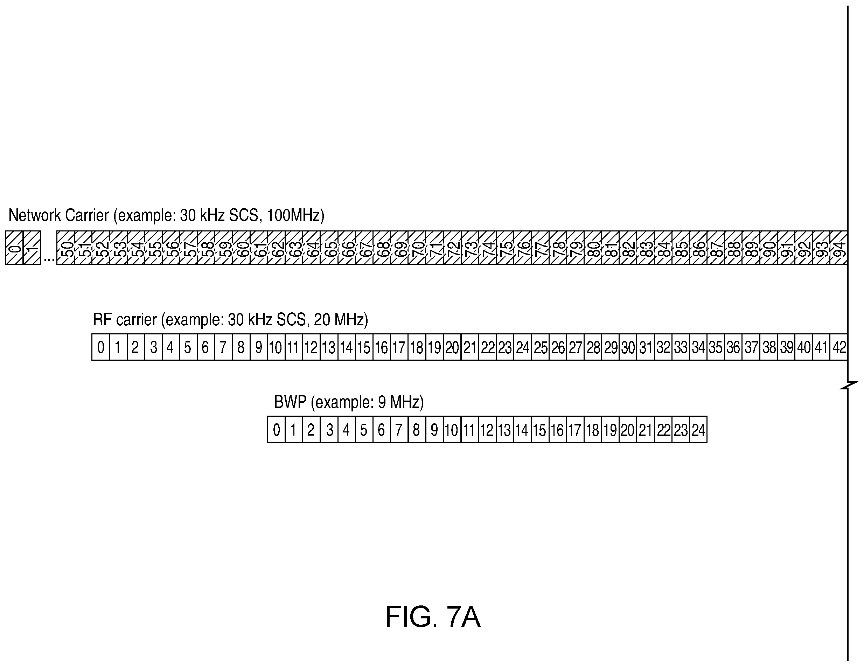

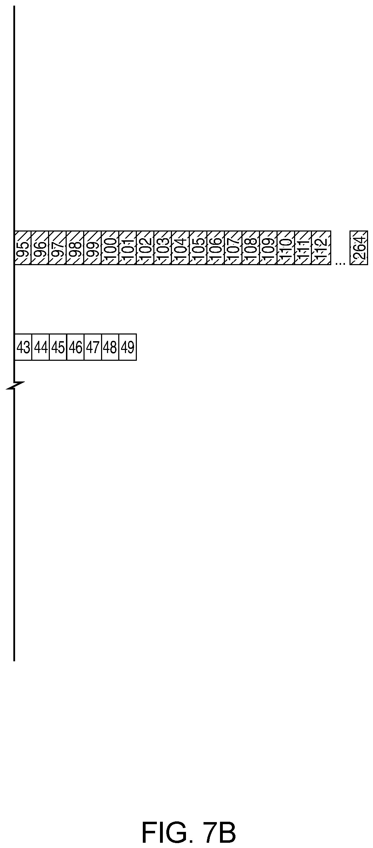

Fig. 7 shows a UE RF carrier, a network carrier and a BWP according to an example embodiment. The example configuration is defined by:

- Subcarrier spacing: 30 kHz
- Network carrier: 265 RBs, 100 MHz
- RF carrier (2): 50 RBs, 20 MHz
- RF carrier (2) starting RB: #52
- RF carrier (2) ending RB: #101
- BWP starting RB: #62
- BWP ending RB: #86

The MPR is determined according to the UE RF carrier 2 which is narrower than the network carrier but wider than the UE's BWP. In contrast, in current NR, MPR is determined according to the network carrier.

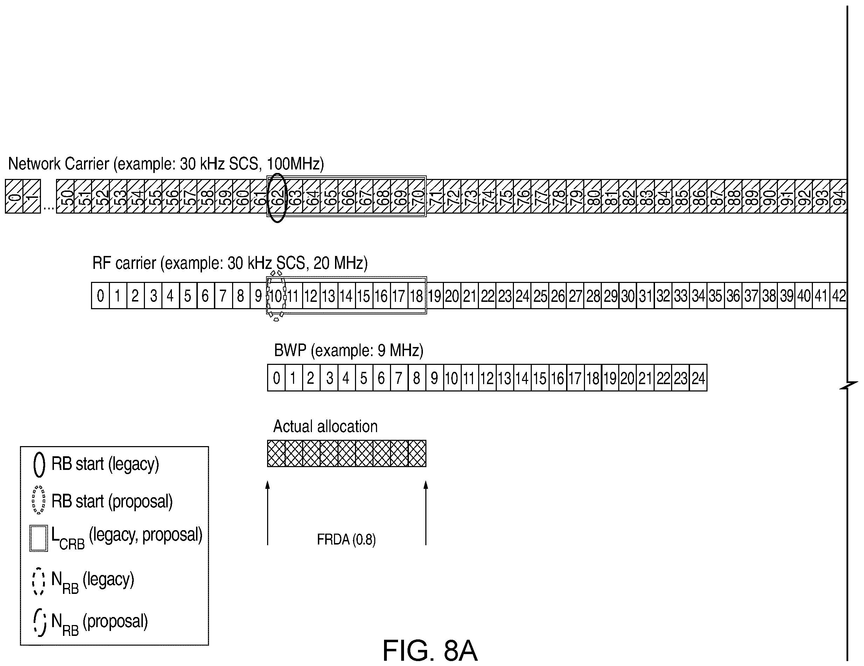

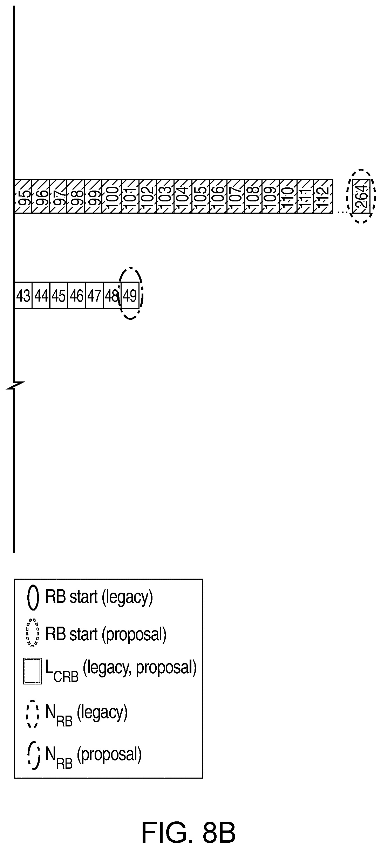

Fig. 8 shows a RB allocation (FDRA) within the BWP that is generated by the network node according to an example embodiment. An indication of the RB allocation is transmitted to the UE from the network node and indicates a starting RB (RB_start) and a length of the RB allocation ($N_{RB}$). Fig. 8 shows how to interpret RB_start and $N_{RB}$ when classifying the RB allocation as an inner, outer or edge RB allocation based on UE RF carrier 2. Both the network and the UE may determine the classification of the RB allocation as one of inner, outer or edge based on the UE RF carrier. This is performed using the equations discussed above with UE RF carrier 2 replacing the channel bandwidth. The equations are unchanged compared to TS 38.101-x.

$$RB_{Start} \left( RF \text{ carrier } 2 \right) = RB_{Start} \left( \text{network carrier} \right) - Offset_{toNetworCarrier} = RB_{Start}'$$

$$N_{RB} \left( RF \text{ carrier } 2 \right) = \text{Configured size of RF carrier } 2 = N_{RB}'$$

In the example of Fig. 8, RB offset with respect to network carrier ($Offset_{toNetworCarrier}$) = 52 RBs and $N_{RB}'$=50 RBs, respectively. In legacy configurations, the classification of the RB allocation would be determined using the circles on the network carrier whereas embodiments classify the RB allocation with respect to the circles on the UE carrier.

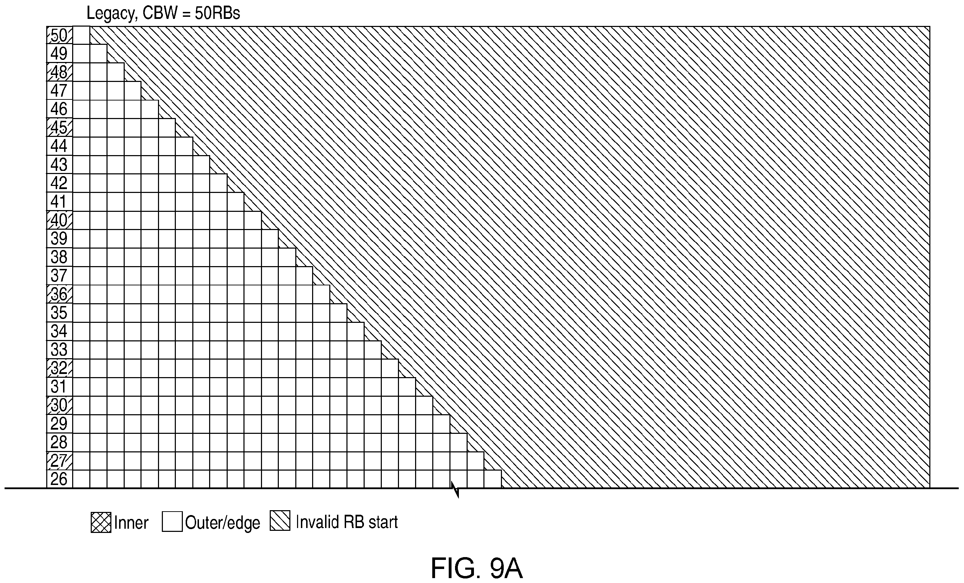

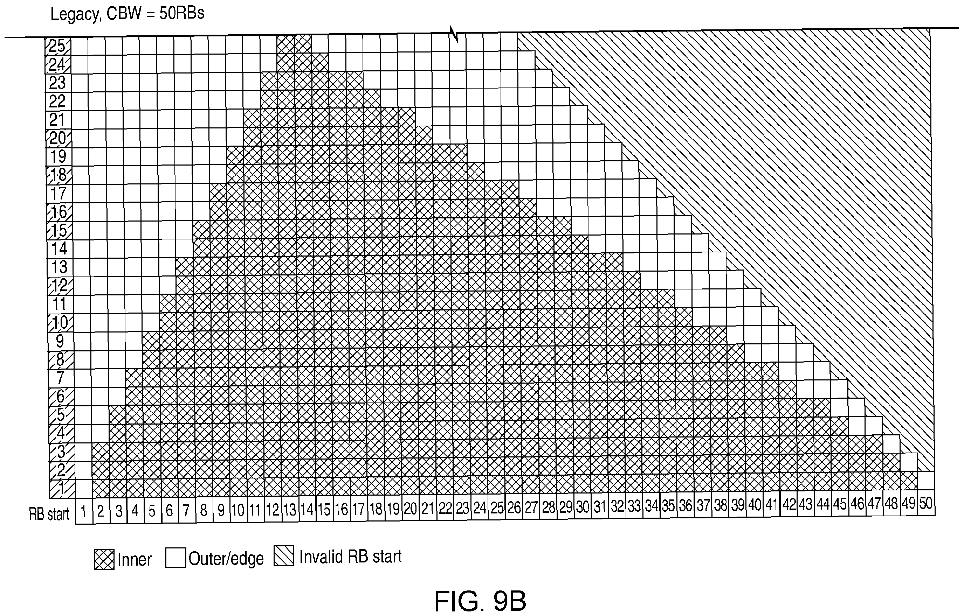

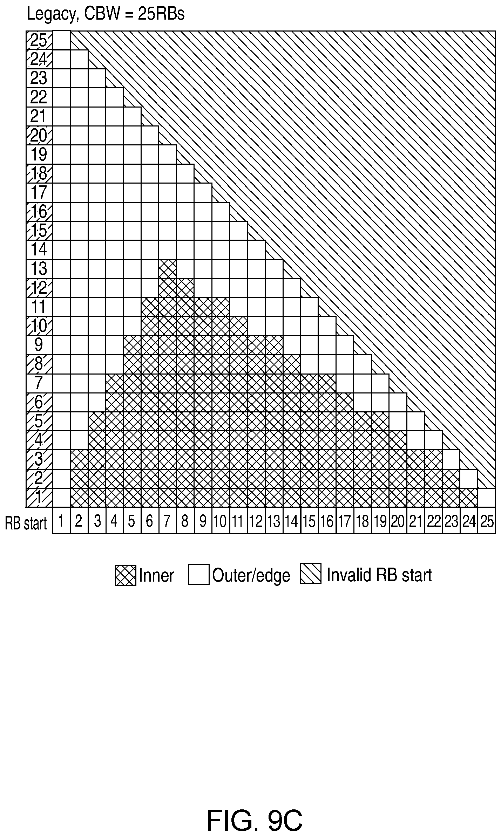

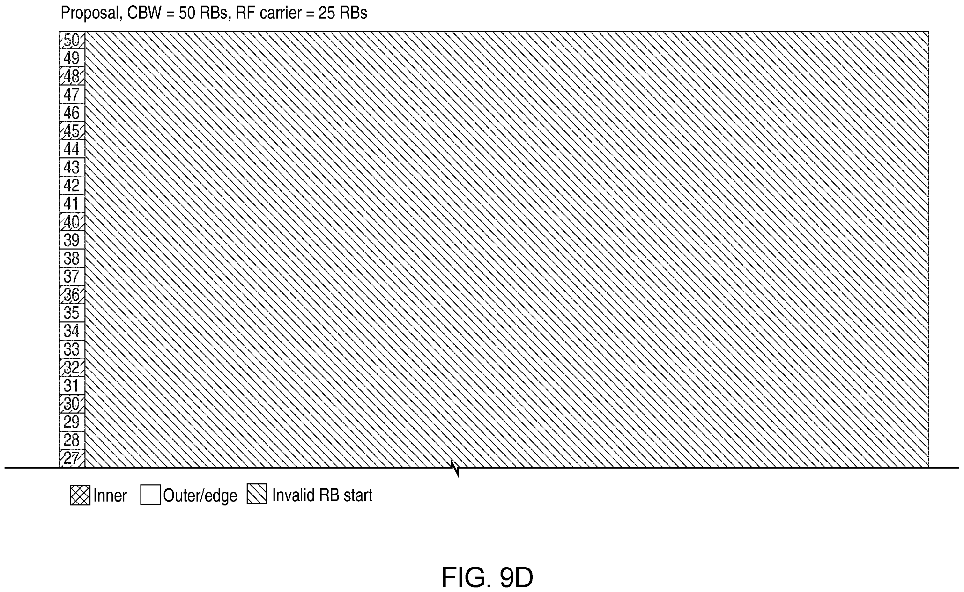

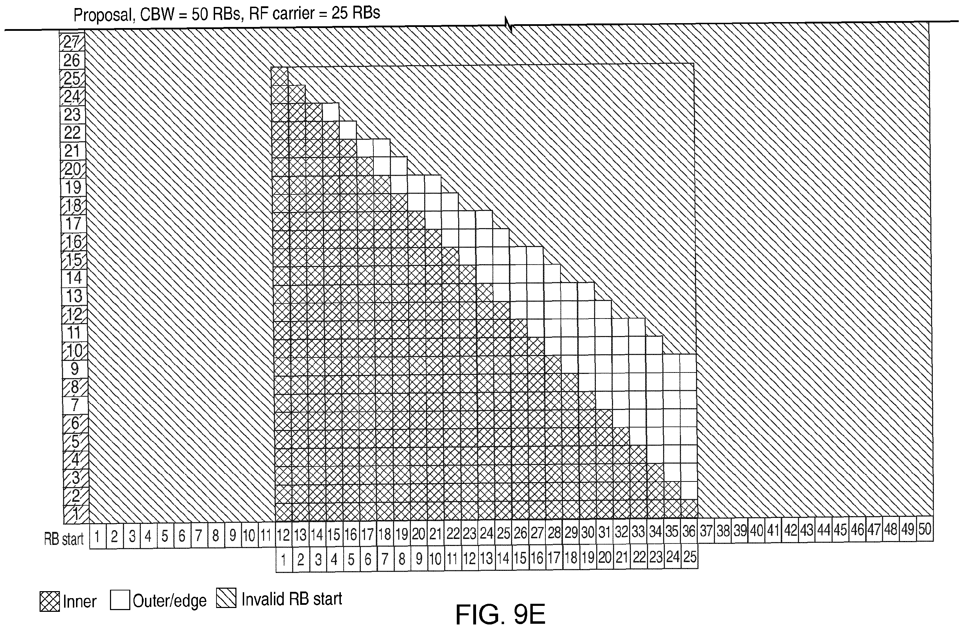

Fig. 9 shows the distribution of RB allocations for the legacy carrier configurations in the left-hand and centre graphs. The left figure shows the inner and outer regions for a legacy 20 MHz CBW and the middle figure shows the inner and outer regions for 10 MHz CBW (25 RBs). The right-hand graph of Fig. 9 shows the RB allocation classification (and hence the MPR) for the example embodiment shown in Figs. 7 and 8 in which the BWP size is 25 RBs (~9 MHz). Accordingly, the inner, outer and invalid regions for the 25-RB BWP applying a RF carrier 2 of 50 RBs is shown. It shows that use of the "over dimensioned" UE RF carrier 2 (20 MHz / 50 RBs) for a smaller BWP (such as 25 RBs) results in the whole BWP being operated with MPR defined for inner allocations. Note that the top-right half of the graph represents the invalid starting points for RB allocations within the BWP.

Fig. 10 shows how the carrier configuration affects the intermodulation distortion (IMD) products of a wanted signal transmitted over the UE carrier. Embodiments aim to reduce or eliminate IMD products falling in the victim band (e.g., an OOBE region).

Fig. 10 shows the resultant IMD product for a wanted signal transmitted by a UE over a UE carrier. In the top diagram, the UE carrier is equal to the network carrier as per legacy configurations. In the bottom diagram, the UE carrier is configured according to example embodiments disclosed herein and is contained within a wider network carrier which defines the beginning of the OOBE region. The wanted signal positioned at one side of the UE carrier produces an image on the opposite side of the DC which is in the centre of the UE carrier. The wanted signal and image can create IMD products. The location of the IMD products is dependent on the distance between the wanted signal and the DC. The further away the wanted signal is from the DC, the further away the IMD product is from the carrier. Similarly, the closer the wanted signal is to the DC the closer the IMD products are located. This is why RB allocations towards the centre of a UE carrier may be classified as inner RB allocations and can have a reduced MPR value as the resultant IMD products are not created as far away and will not cause interference with neighbouring bands. As a result, the UE can transmit a wanted signal near the centre of the carrier with more power compared to signals being transmitted at the edges of the carrier. In top diagram of Fig. 10, the wanted signal is far from the DC and so the IMD product falls in the victim band (e.g., the OOBE region). In bottom diagram of Fig. 10, the UE carrier is narrower than the network carrier. Given that the DC is defined to be the centre of the UE carrier, the wanted signal is closer to the DC and so the IMD product is not as far away. In this instance, the IMD product does not reach the victim band and so A-MPR values can be reduced for the bottom diagram compared to the top diagram. Furthermore, embodiments help relax the A-MPR requirement by distancing the victim band from the UE carrier by virtue of defining the OOBE region as being outside the network carrier rather than outside the narrower UE carrier.

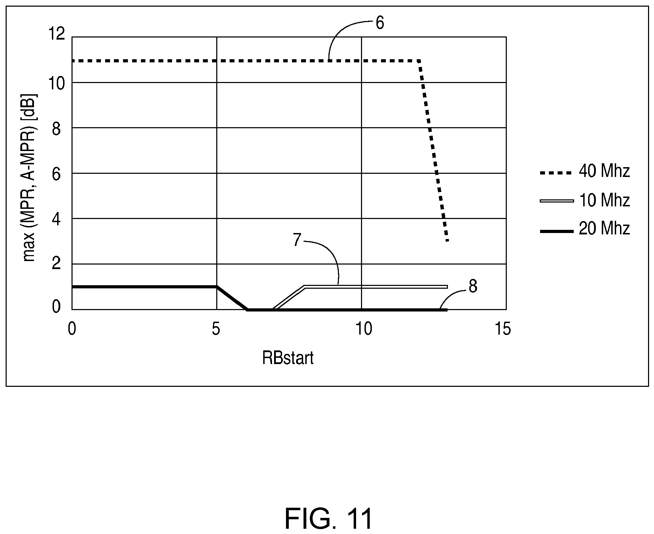

Fig. 11 shows the allowed power reduction for a UE for different scenarios with a 12 RB allocation. Specifically, FIG. 11 shows the impact to the max(MPR, A-MPR) values for the embodiment shown in Fig. 5 for NS_50 on n39 or n98 band for a 40 MHz network carrier CBW and 30 kHz SCS. Considering the case where the UE is configured with a 10 MHz (25-RB) BWP at the lower edge of the 40 MHz network carrier, the max(MPR, A-MPR) values are shown for a 12-RB allocation (QPSK and DFT-s-OFDM waveform) in which i) a UE CBW is 40 MHz, corresponding to network carrier CBW (legacy option a, reference 6), ii) a UE CBW is 10 MHz, corresponding to BWP (legacy option b, reference 7), and iii) the proposed configuration with UE RF carrier 2 of 20 MHz (reference 8). Fig. 11 shows that legacy option a allows for a large max(MPR, A-MPR) value and the network needs to be prepared for the UE maximum transmission power being reduced by 11 dBs for the BWP configuration in question. For legacy option b, the UE is allowed 1 dB max(MPR, A-MPR) in almost all RB starting positions. However, for configurations according to example embodiments, 1 dB max(MPR, A-MPR) is seen only on the first 5 RB starting positions after which max(MPR, A-MPR) falls to 0 dB. Therefore, example embodiments may reduce the A-MPR for potential RB allocations.

The advantages gained from the example embodiments include minimizing A-MPR and MPR at the same time, maximising reuse of the existing RAN4 requirements, relaxing out-of-band emissions by defining the OOBE and IBE region using the network carrier and not UE RF carrier which can result in reduced UE complexity and/or higher UE transmission power for scenarios limited by OOBE, improving network control and awareness on A-MPR, MPR, and the UE's configured maximum transmission power values that it will see after the configuration of BWP to the UE, and being one step towards the CBW agnostic UE requirements which could potentially reduce the specification complexity by minimizing the number of options.

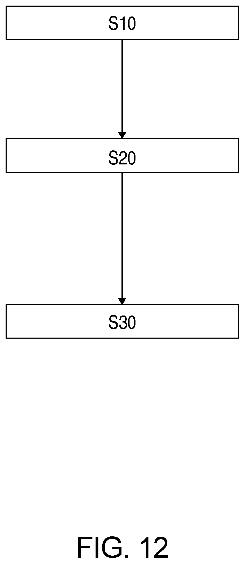

Fig. 12 shows a method performed at a UE according to an example embodiment. Step S10 comprises receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier.

Step S20 comprises determining at least one user equipment radio frequency requirement based on the second radio frequency carrier.

Step S30 comprises transmitting a signal over the second radio frequency carrier based on the at least one user equipment radio frequency requirement and the one or more out-of-band emission requirements.

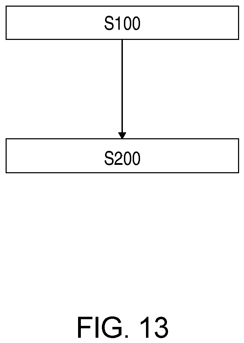

Fig. 13 shows a method performed at a network node according to an example embodiment. Step S100 comprises configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier, wherein the second radio frequency carrier is configured based on at least one user equipment radio frequency requirement.

Step S200 comprises transmitting an indication of the second radio frequency carrier to the user equipment.

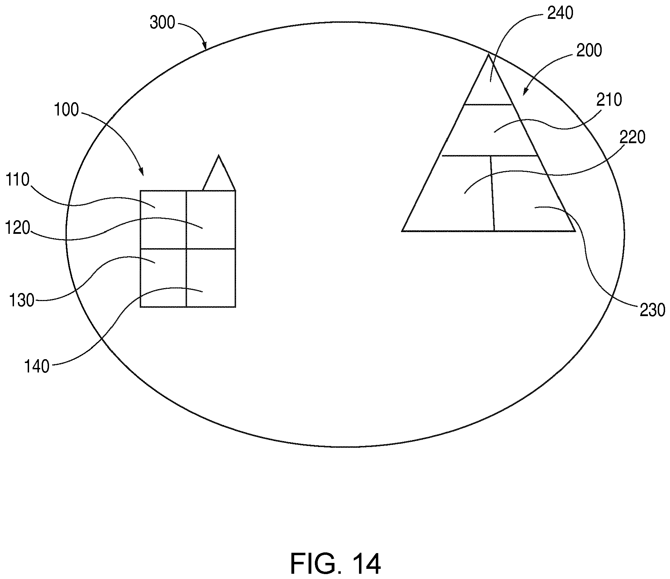

Fig. 14 shows a UE 100 and a serving network node 200 according to an embodiment which may be used for implementing the above-described embodiments. Network node 200 supports providing radio coverage in a cell 300 and may comprise a distributed unit of a gNB, which communicates with a central unit. Alternatively, network node 200 may comprise a base station, or a femto network node, for example.

UE 100 comprises a data store or memory 110 for storing computer program instructions and information received from the network node 20. The UE further comprises receiving circuitry 120 for receiving transmissions comprising information and data, for example, transmissions from the network node 200 containing indications of a UE RF carrier, a network RF carrier, a BWP and/or a resource block allocation. The UE further comprises determining circuitry 130 for determining one or more UE RF requirements. The UE further comprises transmitting circuitry 140 for transmitting signals comprising information and data, for example, uplink transmissions to the network node transmitted in accordance with one or more determined UE RF requirements.

Network node 200 comprises a data store or memory 210, transmitting circuitry 220 for transmitting messages to the user equipment 100 and receiving circuitry 230 for receiving messages from the user equipment 100. The receiving circuitry 230 is configured to receive uplink transmissions from the UE 100. The transmitting circuitry 220 is configured to transmit indications of a UE RF carrier, a network RF carrier, a BWP and/or a resource block allocation to the UE 100. The network node 200 further comprises configuring circuitry 240 for configuring the UE RF carrier and generating a message comprising an indication of the UE RF carrier to be sent by the transmitting circuitry 220.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

List of Abbreviations

| A-MPR | Additional MPR |
|-------|---------------|
| BWP | Bandwidth part |
| CA | Carrier aggregation |
| CBW | Channel bandwidth |
| DC | Direct Current Subcarrier |
| FDRA | Frequency Domain Resource Allocation |
| IBE | In-band emissions |
| IM(D) | Intermodulation (Distortion) |
| MPR | Maximum Power Reduction |
| NS | Network Signalling |
| OOBE | Out-of-band emissions |
| RB | Resource block |

RF      Radio frequency
TS      Technical specification
Tx      Transmit
UE     User Equipment
UL     Uplink

**Claims**

1. An apparatus, comprising:

    at least one processor; and
    at least one memory storing instructions that when executed by the at least one processor cause the apparatus at least to perform:

    receiving, from a network node, an indication of a second radio frequency carrier, the second radio frequency carrier being contained within a first radio frequency carrier over which the network node communicates, one or more out-of-band emission requirements for the apparatus being defined with respect to the first radio frequency carrier;
    determining at least one user equipment radio frequency requirement based on the second radio frequency carrier; and
    transmitting a signal over the second radio frequency carrier based on the at least one user equipment radio frequency requirement and the one or more out-of-band emission requirements.

2. The apparatus of claim 1, wherein the at least one user equipment radio frequency requirement comprises a maximum power reduction value and/or an additional-maximum power reduction value.

3. The apparatus of any preceding claim, wherein the apparatus is further caused to perform:

    determining a maximum transmission power based on the at least one user equipment radio frequency requirement, and
    transmitting the signal with a power equal to or less than the maximum transmission power.

4. The apparatus of any preceding claim, wherein the apparatus is further caused to perform:
   in response to receipt of an indication of a bandwidth part contained within the second radio frequency carrier, transmitting the signal within the bandwidth part.

5. The apparatus of claim 4, wherein the bandwidth part comprises a plurality of resource blocks, and wherein the apparatus is further caused to perform:

    in response to receipt of an indication of a resource block allocation contained within the bandwidth part, transmitting the signal using the resource block allocation; and
    wherein the user equipment radio frequency requirement comprises a maximum power reduction value, the maximum power reduction value being determined based on a classification of the resource block allocation, each allocation of one or more resource blocks of the bandwidth part being classified, based on the second radio frequency carrier, as at least one of the following: an inner resource block allocation, an outer resource block allocation, and an edge resource block allocation.

6. The apparatus of claim 5, wherein each allocation of one or more resource blocks of the bandwidth part is classified as an inner resource block allocation.

7. The apparatus according to any preceding claim, wherein an out-of-band emissions region comprises outside the first radio frequency carrier, out-of-band emissions being signals resulting from transmissions over the second radio frequency carrier falling in the out-of-band emissions region.

8. An apparatus, comprising:

    at least one processor; and
    at least one memory storing instructions that when executed by the at least one processor cause the apparatus at least to perform:

configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier,
wherein the second radio frequency carrier is configured based on at least one user equipment radio frequency requirement; and
transmitting an indication of the second radio frequency carrier to the user equipment.

9. The apparatus of claim 8, wherein the at least one first user equipment radio frequency requirement comprises a maximum power reduction value and/or an additional-maximum power reduction value, preferably wherein configuring the second radio frequency carrier is based on reducing at least one of the following: the maximum power reduction value, the additional-maximum power reduction value, a maximum of the maximum power reduction value and the additional-maximum power reduction value, and a total of the maximum power reduction value and the additional-maximum power reduction value.

10. The apparatus of claim 8 or claim 9, wherein the apparatus is further caused to perform:

determining a bandwidth part in which the user equipment is configured to transmit, the second radio frequency carrier being configured such that the bandwidth part is contained within the second radio frequency carrier; and
transmitting an indication of the bandwidth part to the UE,

11. The apparatus of claim 10, wherein the bandwidth part comprises a plurality of resource blocks, and wherein the apparatus is further caused to perform:

determining a resource block allocation contained within the bandwidth part for a transmission by the user equipment; and
transmitting an indication of the resource block allocation to the user equipment; and
wherein the user equipment radio frequency requirement comprises a maximum power reduction value, the maximum power reduction value being determined based on a classification of the resource block allocation, each allocation of one or more resource blocks of the bandwidth part being classified, based on the second radio frequency carrier, as at least one of the following: an inner resource block allocation, an outer resource block allocation, and an edge resource block allocation.

12. The apparatus according to any one of claims 8 to 11, wherein the second radio frequency carrier is configured to be offset by a number of resource blocks with respect to a starting resource block and/or an ending resource block of the first radio frequency carrier.

13. A method, comprising:

receiving from a network node an indication of a second radio frequency carrier, the second radio frequency carrier being contained within a first radio frequency carrier over which the network node communicates, one or more out-of-band emission requirements for the apparatus being defined with respect to the first radio frequency carrier;
determining at least one user equipment radio frequency requirement based on the second radio frequency carrier; and
transmitting a signal over the second radio frequency carrier based on the at least one user equipment radio frequency requirement and the one or more out-of-band emission requirements.

14. A method, comprising:

configuring a second radio frequency carrier over which a user equipment is configured to transmit, the second radio frequency carrier being contained within a first radio frequency carrier over which the apparatus communicates, one or more out-of-band emission requirements for the user equipment being defined with respect to the first radio frequency carrier,
wherein the second radio frequency carrier is configured based on at least one user equipment radio frequency requirement; and

transmitting an indication of the second radio frequency carrier to the user equipment.

15. A non-transitory computer readable medium comprising program instructions stored thereon for causing an apparatus to perform at least the steps of claim 13 or claim 14.

NW carrier 400Mhz

UE2 BWP1

UE1 BWP1          UE2 BWP2          BWP switching

FIG. 1

Table 6.2.2-1 Maximum power reduction (MPR) for power class 3

| Modulation | | MPR (dB) | | |
|---|---|---|---|---|
| | | Edge RB allocations | Outer RB allocations | Inner RB allocations |
| DFT-s-OFDM | Pi/2 BPSK | ≤ 3.5[1] | ≤ 1.2[1] | ≤ 0.2[1] |
| | | ≤ 0.5[2] | ≤ 0.5[2] | 0[2] |
| | Pi/2 BPSK w Pi/2 BPSK DMRS | ≤ 0.5[2] | 0[2] | 0[2] |
| | QPSK | ≤ 1 | | 0 |
| | 16 QAM | ≤ 2 | | ≤ 1 |
| | 64 QAM | ≤ 2.5 | | |
| | 256 QAM | ≤ 4.5 | | |
| CP-OFDM | QPSK | ≤ 3 | | ≤ 1.5 |
| | 16 QAM | ≤ 3 | | ≤ 2 |
| | 64 QAM | ≤ 3.5 | | |
| | 256 QAM | ≤ 6.5 | | |
| NOTE 1: | Applicable for UE operating in TDD mode with Pi/2 BPSK modulation and UE indicates support for UE capability *powerBoosting-pi2BPSK* and if the IE *powerBoostPi2BPSK* is set to 1 and 40 % or less slots in radio frame are used for UL transmission for bands n40, n41, n77, n78 and n79. The reference power of 0 dB MPR is 26 dBm. | | | |
| NOTE 2: | Applicable for UE operating in FDD mode, or in TDD mode in bands other than n40, n41, n77, n78 and n79 with Pi/2 BPSK modulation and if the IE *powerBoostPi2BPSK* is set to 0 and if more than 40 % of slots in radio frame are used for UL transmission for bands n40, n41, n77, n78 and n79. | | | |

FIG. 2

FIG. 3

a) 15 MHz (79 RB) UERF BW       b) 5 MHz (25 RB) UE RF BW

FIG. 4

FIG. 5

Network carrier

RF Carrier

BWP

FDRA

OOBE    IBE

RF

IBE    OOBE

RF

FIG. 6

EP 4 518 456 A1

Network Carrier (example: 30 kHz SCS, 100MHz)

| 0 | 1 | ... | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | 81 | 82 | 83 | 84 | 85 | 86 | 87 | 88 | 89 | 90 | 91 | 92 | 93 | 94 |

RF carrier (example: 30 kHz SCS, 20 MHz)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 |

BWP (example: 9 MHz)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

FIG. 7A

| 95 | 96 | 97 | 98 | 99 | 100 | 101 | 102 | 103 | 104 | 105 | 106 | 107 | 108 | 109 | 110 | 111 | 112 | ... | 264 |
|----|----|----|----|----|-----|-----|-----|-----|-----|-----|-----|-----|-----|-----|-----|-----|-----|-----|-----|

| 43 | 44 | 45 | 46 | 47 | 48 | 49 |
|----|----|----|----|----|----|----|

## FIG. 7B

Network Carrier (example: 30 kHz SCS, 100MHz)

0 1 ... 50 51 52 53 54 55 56 57 58 59 60 61 62 63 64 65 66 67 68 69 70 71 72 73 74 75 76 77 78 79 80 81 82 83 84 85 86 87 88 89 90 91 92 93 94

RF carrier (example: 30 kHz SCS, 20 MHz)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 |

BWP (example: 9 MHz)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |

Actual allocation

FRDA (0.8)

◯ RB start (legacy)

⬭ RB start (proposal)

☐ $L_{CRB}$ (legacy, proposal)

⦙ $N_{RB}$ (legacy)

⦇ $N_{RB}$ (proposal)

FIG. 8A

95 96 97 98 99 100 101 102 103 104 105 106 107 108 109 110 111 112 ... 264

43 44 45 46 47 48 49

| ⏴⏵ | RB start (legacy) |
| ⏴⏵ | RB start (proposal) |
| ☐ | $L_{CRB}$ (legacy, proposal) |
| ⟨⟩ | $N_{RB}$ (legacy) |
| ⟨⟩ | $N_{RB}$ (proposal) |

FIG. 8B

Legacy, CBW = 50RBs

Inner ☒  Outer/edge ☐  Invalid RB start ☒

FIG. 9A

Legacy, CBW = 50RBs

Inner ☒  Outer/edge ☐  Invalid RB start ◩

FIG. 9B

Legacy, CBW = 25RBs

Inner ⊠ Outer/edge ☐ Invalid RB start ⧄

FIG. 9C

Proposal, CBW = 50 RBs, RF carrier = 25 RBs

Inner ☐Outer/edge ⧄Invalid RB start

FIG. 9D

Proposal, CBW = 50 RBs, RF carrier = 25 RBs

⊠ Inner  ☐ Outer/edge  ◩ Invalid RB start

FIG. 9E

Network carrier

DC

Wanted
Signal

IMD product

Image

Network Carrier

Victim

RF carrier

DC

Wanted
Signal

IMD product

Image

RF carrier

Victim

FIG. 10

FIG. 11

```
┌─────────────────────┐
│        S10          │
└─────────────────────┘
           │
           ▼
┌─────────────────────┐
│        S20          │
└─────────────────────┘
           │
           ▼
┌─────────────────────┐
│        S30          │
└─────────────────────┘
```

# FIG. 12

```
┌─────────────────────────────────┐
│              S100               │
└─────────────────────────────────┘
                 │
                 ▼
┌─────────────────────────────────┐
│              S200               │
└─────────────────────────────────┘
```

FIG. 13

FIG. 14

Europäisches
Patentamt

European
Patent Office

Office européen
des brevets

# EUROPEAN SEARCH REPORT

Application Number

EP 23 19 4755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 385 187 A (NOKIA TECHNOLOGIES OY) 19 February 2021 (2021-02-19) * paragraphs [0006] - [0061] * * claims 12-13 * | 1-15 | INV. H04W52/14 H04W52/36 H04W52/34 H04W74/0808 |
| A | CN 109 196 830 A (ERICSSON TELEFON AB L M) 11 January 2019 (2019-01-11) * paragraphs [0036] - [0044], [0049] - [0053] * | 1-15 | |

TECHNICAL FIELDS
SEARCHED      (IPC)

H04W

The present search report has been drawn up for all claims

| Place of search | Date of completion of the search | Examiner |
|---|---|---|
| The Hague | 12 February 2024 | Lustrini, Donato |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 19 4755**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-02-2024**

| Patent document cited in search report | | Publication date | Patent family member(s) | | Publication date |
|---|---|---|---|---|---|
| CN 112385187 | A | 19-02-2021 | CN | 112385187 A | 19-02-2021 |
| | | | EP | 3794784 A1 | 24-03-2021 |
| | | | US | 2021243807 A1 | 05-08-2021 |
| | | | WO | 2019219155 A1 | 21-11-2019 |
| CN 109196830 | A | 11-01-2019 | AR | 108119 A1 | 18-07-2018 |
| | | | CN | 109196830 A | 11-01-2019 |
| | | | EP | 3443716 A1 | 20-02-2019 |
| | | | WO | 2017180045 A1 | 19-10-2017 |

EPO FORM P0459

For more details about this annex : see Official Journal of the European Patent Office, No. 12/82